# EUROPEAN PATENT SPECIFICATION

(11) **EP 2 202 194 B1**
(45) Date of publication and mention of the grant of the patent: **30.05.2012**
(21) Application number: 09180058.1
(22) Date of filing: 21.12.2009
(51) Int. Cl.: B66C 23/90

(54) **Personnel hoist**
Personal Hebezeug
Élévateur de personnel

(30) Priority: 29.12.2008 FI 20086242
(43) Date of publication of application: 30.06.2010
(73) Proprietor: Bronto Skylift OY AB, 33300 Tampere (FI)
(72) Inventor: Törnqvist, Jouni, 33560 Tampere (FI)
(74) Representative: Kuosmanen, Timo

(56) References cited:
- EP-A1- 0 063 709
- EP-A1- 0 994 065
- EP-A2- 1 300 595
- GB-A- 2 050 294
- GB-A- 2 239 647
- JP-A- 2001 247 300

## Description

### BACKGROUND OF THE INVENTION

The invention relates to a personnel hoist. The field of the invention is determined in closer detail in the preamble of the independent claim.

A movable carrier, such as a vehicle or a trailer thereof, may be provided with a boom and a man gage or the like at an end of the boom. Such personnel hoists are used e.g. in fire fighting and rescue, building contracting as well as in maintenance and repair. A boom may consist of one or more boom parts. During use, the boom is subjected to various stresses under the influence of which the boom bends. Such bending plays an important role especially in connection with particularly long booms; typically, the booms of personnel hoists are such booms. It is known to measure the deformation caused to the boom by bending by means of strain gauges. However, these are difficult to arrange on the boom. In addition, the measurement accuracy is insufficient. A crane comprising features of the preamble of the independent claim is disclosed UK-publication 2050294 A.

### BRIEF DESCRIPTION OF THE INVENTION

An object of the present invention is to provide a novel and improved personnel hoist.

A personnel hoist according to the invention is characterized by the features presented in the independent claim.

An idea is that two or more angle sensors are arranged in the boom or in connection therewith at a distance from one another. When the boom is not subjected to any bending stress, angle data given by the angle sensors is the same, or an angle difference therebetween is known. When the boom is subjected to stress and it bends, an angle difference is generated between the angle data of the angle sensors located at a distance from one another. The bending of the boom may be determined on the basis of a detected angle difference and a difference between measurement points.

An advantage is that it is simple to provide the boom with angle sensors and no changes need to be made to the structure of the boom. The angle sensors may be fastened in a simple manner e.g. to a side surface of the boom. Various angle sensors are also readily available and they have been found to be very durable against the stresses generated during use of the personnel hoist. A further advantage is an improved measurement accuracy. A still further advantage of the measurement system is that it does not examine a single measurement point only, as is the case in connection with a strain gauge measurement, but now an angle difference is compared which is given by sensors located at a distance from one another and which is dependent on the bending occurring over a section between the measurement points. Consequently, it may be thought that the angle sensors and a boom section residing therebetween form what in effect is a power sensor.

An idea of an embodiment is that the angle sensor is an inclinometer which measures inclination of a measurement point with respect to earth's gravity.

An idea of an embodiment is that the angle sensor is a gyro sensor.

An idea of an embodiment is that a first angle sensor is arranged in a lower part of a boom and a second angle sensor is arranged in an upper part of the boom. In such a case, the sensors are located as far from one another as possible, which improves the measurement accuracy. The boom or the boom part in which the sensors are arranged is a rigid structure with no joints in a direction of view of bending.

An idea of an embodiment is that the boom is elongatable and shortenable over a section between the first angle sensor and the second angle sensor. In such a case, the distance between the angle sensors is to be determined so as to enable the bending of the boom to be determined. Such a boom with an alterable length may be provided with a measuring device appropriate for this purpose.

An idea of an embodiment is that the boom comprises a first boom part attached by means of a first joint to a rotatable frame provided on a carrier of the personnel hoist. The boom further comprises a second boom part attached by means of a second joint to an upper end of the first boom part. A free end of the second boom part is provided with a man cage. In this embodiment, at least the lower first boom part, which is usually clearly longer than the second boom part, is provided with angle sensors for determining the bending thereof.

An idea of an embodiment is that the method comprises determining, in the control unit, a magnitude of an external force to which the boom is subjected on the basis of the boom's bending data, own mass, geometry and strength-related technical data. This makes it possible to determine a force caused by wind, for example, which may be a very significant factor in connection with tall personnel hoists for rescue service. In addition, an external force caused by a load in the man gage may be determined. If a load is taken on the man cage during use, e.g. a person to be rescued, the force caused by this additional mass may be taken into account in controlling the personnel hoist. Further, a collision of the boom against external structures may be detected on the basis of the bending data. This enables such unusual forces and loads caused by collisions to be registered as well as these to be taken into account in monitoring the condition of the personnel hoist.

An idea of an embodiment is that the method comprises registering accumulatively, in the control unit, data relating to the bending of the boom as well as data relating to the forces to which the boom is subjected. These registered data are taken into account in monitoring the condition of the boom. This enables stresses to which the boom is subjected to be assessed and, on the basis thereof, the remaining operational life and maintenance need of the boom to be determined.

An idea of an embodiment is that the method comprises storing, in the control unit, measurement data relating to previous loading situations of the boom, and using these data in condition monitoring of the boom. Further, the method comprises comparing each new loading situation with the previous loading situations and detecting sudden deviations in a trend of changes in the bending. In such a case, it is possible to detect e.g. that a welded joint of the boom has failed or that a component has been broken. It may further be detected if the bending of the boom is about to reach a predetermined at least one limit value. This enables e.g. the wearing down of the sliding surfaces of the telescopic structure of the boom to be detected at an early stage and repair and maintenance to be carried out before damages become too severe or safety is compromised.

An idea of an embodiment is that the method comprises determining a location of the outermost end of the boom or the man cage during use and calibration, and taking into account the influence of the bending of the boom on the location. A positioning error caused by the bending may be compensated for in controlling the boom. This enables the boom to be controlled more accurately. Further, it is possible to allow smaller safety tolerances for the maximum reaching range of the personnel hoist when the location of the outermost end of the boom is accurately known by the control unit. When smaller tolerances are allowed for the maximum reaching range, the reaching range available for the personnel hoist may be larger.

An idea of an embodiment is that the method comprises using the measurement of the bending of the boom for determining dynamic forces of the personnel hoist. This data may be utilized at least in the control and condition monitoring of the personnel hoist.

### BRIEF DESCRIPTION OF THE FIGURES

Some embodiments of the invention are described in closer detail in the accompanying drawings, in which
Figure 1 schematically shows a personnel hoist whose boom is in an operational position,
Figure 2 schematically shows a personnel hoist in a situation wherein a boom is in a transportation position,
Figure 3 schematically shows a measurement system according to the invention,
Figure 4 schematically shows bending caused by a clearance between portions of a telescopic boom part and measurement thereof, and
Figure 5 schematically shows a change caused in positioning by the bending of a boom.

For the sake of clarity, the figures show some embodiments of the invention in a simplified manner. Like reference numerals identify like elements.

### DETAILED DESCRIPTION OF SOME EMBODIMENTS OF THE INVENTION

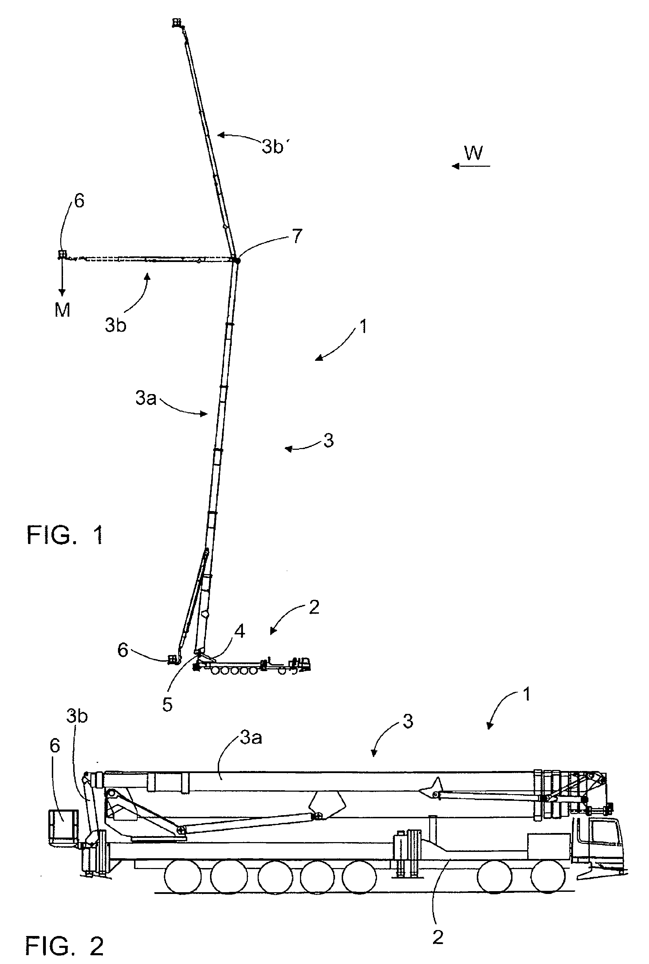

Figure 1 shows a personnel hoist 1 comprising a carrier 2 provided with a boom 3. The carrier 2 may be a movable carrier, such as a vehicle or a trailer. The carrier 2 may be provided with a rotatable frame 4 to which a lower end of the boom 3 is fastened by means of a first joint 5. An upper end of the boom 3 is provided with a man cage 6 housing a space for hoisting one or more persons. In addition, necessary work devices, such as means for spraying a fire extinguishing medium, may be provided in connection with the man cage 6. The boom 3 may comprise
two boom parts connected pivotably with one another. In some cases, the boom 3 may comprise three or more boom parts. The boom 3 shown in Figure 1 comprises a first boom part 3a and a second boom part 3b, a second joint 7 being provided therebetween. A lower part of the first boom part 3a is by means of the first joint 5 fastened to the rotatable frame 4, enabling it to be lifted and lowered with respect to the joint 5. By rotating the rotatable frame 4, the boom may be moved in a lateral direction. The second boom part 3b may be lifted and lowered with respect to the second joint 7. In Figure 1, a reference number 3b' indicates the second boom part which has been lifted to a top position. The length of the first boom part 3a and the second boom part 3b may be changed telescopically, in which case the boom 3 may be shortened for a transportation position and elongated in a use situation as desired. As shown in Figure 1, the reaching range of the personnel hoist may be quite extensive. Personnel hoists used in rescue service in particular have to be able to reach higher and higher as buildings become taller and taller. The reaching range may be up to 100 metres. During use, the long boom 3 is subjected to various forces and subsequent bending. In addition to the mass of the boom 3 and the man cage 6 of their own, a wind load W, the weight of the persons and equipment in the man cage, i.e. the effective mass M, the dynamic forces caused by moving the boom, as well as yet other external forces, such as collisions against external structures, also cause bending.

In Figure 2, the boom 3 of the personnel hoist has been driven into a transportation position onto the carrier 2.

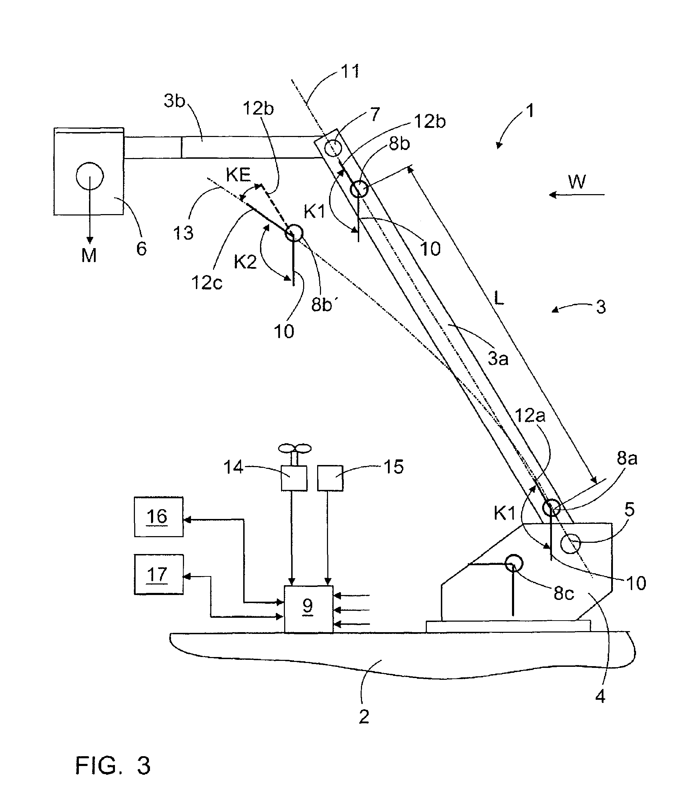

In a highly simplified manner, Figure 3 illustrates an arrangement associated with measuring the bending of the boom 3. In Figure 3, the first boom part 3a is a one-piece structure but, of course, it may be a telescopically elongatable and shortenable construction. Even if the first boom part 3a did comprise a telescopic structure, it may be considered as a rigid unpivoted structure as far as bending is concerned. In a telescopic structure, the portions of the boom are arranged to move with respect to one another in a longitudinal direction but substantially not at all in a transverse direction. The first boom part 3a may be provided with two or more angle sensors 8a, 8b whose measurement data may be communicated to one or more control units 9. The first angle sensor 8a may be arranged in a section of a lower end of the first boom part 3a while the second angle sensor 8b may be arranged in a section of an upper end of the first boom part 3a. In such a case, the angle sensors 8a, 8b reside at a distance L from one another. The greater the distance L, the greater the distance between the measurement points, of course, which improves the measurement accuracy. The angle sensors 8a, 8b may be inclinometers which measure a change in the angle of a measurement point with respect to earth's gravity. In connection with the angle sensors 8a, 8b, 8b', the figure shows directly downwards pointing lines 10, i.e. lines which are parallel with earth's gravity, and lines 12a and 12b indicating the direction of a central axis 11 of the boom at the respective measurement point, as well as a line 12c indicating the direction of a central axis 13 of a bent boom part.

In a theoretical situation, the first boom part 3a may be considered to be completely rigid with respect to bending. In such a case, the first angle sensor 8a and the second angle sensor 8b give the same angle value K1. In practice, however, the boom 3 bends due to the influence of its own mass, as well as the mass M in the man cage and other external forces, such as the wind force W. Further, some bending occurs owing to the clearances in a possible telescopic structure. A dot-and-dash line 13 in Figure 3 illustrates the central axis of the bent boom part. The bending of the first boom part 3a may be detected in that an angle value K2 given by a second angle sensor 3b' deviates from the angle value K1 of the first angle sensor 8a residing at the foot of the boom. An angle difference KE between the angle values K1 and K2 is proportional to the magnitude of the bending of the boom part 3a. If, for instance, the mass M in the man cage increases, the bending and the angle difference KE also increase. Since the first angle sensor 8a is arranged preferably over the section of the lower end of the boom part 3a, the distance between it and the first joint 5 is small and the importance of the bending within this section is insignificant. In order to determine the bending, the magnitude of the distance L has to be known. The bending of the entire length of the boom part 3a and the influence on the entire boom 3 may be calculated on the basis of the bending detected over the distance L when the geometry and position of the boom 3 are known.

It is also feasible to arrange one or more angle sensors in the first boom part 3a over a section between the sensors 8a, 8b; this enables the bending of the boom part 3a to be examined in smaller parts. Furthermore, it is possible to arrange the necessary angle sensors also in the second boom part 3b and examine its bending together with the bending of the first boom part 3a or separately therefrom.

The measurement results obtained from the angle sensors 8a, 8b are communicated to the control unit 9 wherein the angle difference KE may be determined. The bending of the boom 3 may be determined in the control unit on the basis of the angle difference. The control unit 9 may have been provided with data relating to the geometry and strength-related technical details of the boom which enable the control unit 9 to determine the magnitude of the force to which the boom is subjected, the force causing the detected bending. In order to calculate this, the control unit 9 also has to be aware of the positions of the different parts of the boom. The control unit 9 may comprise a processor which may execute a program for producing the necessary calculation, filtering and other data processing procedures. Alternatively, the control unit may be e.g. a programmable logic or the like. Data may be communicated to the control unit 9 also from other sensors and measuring devices. Wind data, for example, may be communicated from an anemometer 14. Further, length data relating to a boom part with an alterable length may be communicated from a suitable measurement sensor 15 or corresponding detectors. The inclination angle of the carrier 2 may be measured by means of a third angle sensor 8c and its measurement results may also be communicated to the control unit 9. The control unit 9 may also be in a data-communication connection with one or more external control units 16. Such an external control unit 15 may be e.g. a portable computer or a server to which data relating to the bendings and stresses of the boom are transmitted for condition monitoring. In addition, the control unit 9 may communicate with a user interface 17 provided in connection with the controls of the personnel hoist, whereby an operator of the personnel hoist may be given the necessary information for using the boom.

It is yet further possible that a suitable fixed angle sensor is provided in connection with the joint 5 for enabling the angle of the boom part 3a to be determined with respect to the rotatable frame 4. In such a case, the sensor 8c enables the inclination of the carrier 2 to be measured and thus a measurement error with respect to the ground made by the sensor provided in connection with the joint 5 to be compensated for. Further, the angle sensor provided in connection with the joint 5 may be utilized in determining the bending of the boom part 3a.

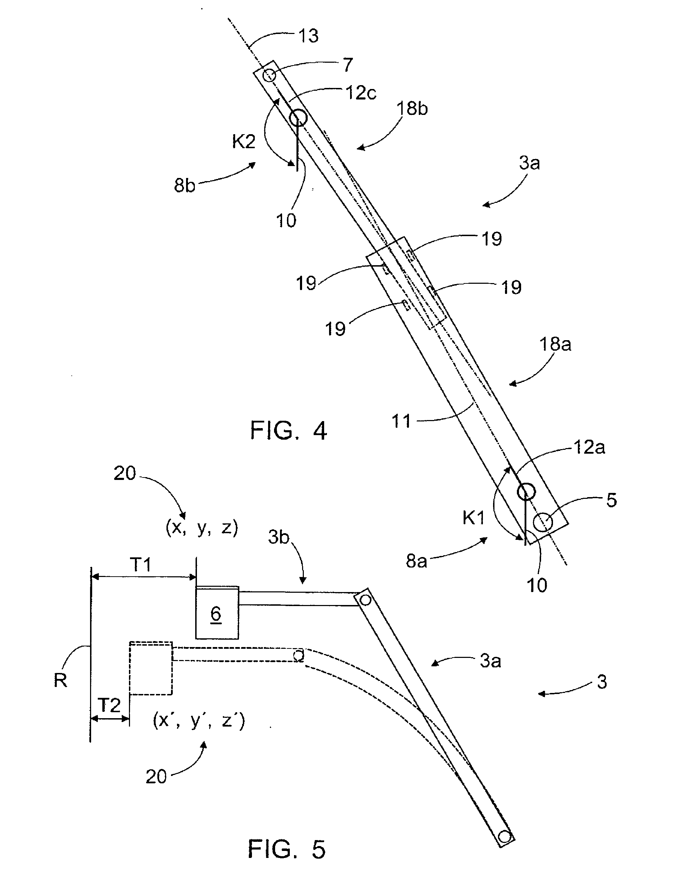

Figure 4 shows a telescopic first boom part 3a which comprises two or more boom portions 18a and 18b which may be moved with respect to one another in a longitudinal direction. The boom portions 18a, 18b move supported by sliding parts 19 or similar surfaces provided therebetween. An operation clearance is provided between the sliding parts 19 and the boom portions, and the bending caused by this clearance may be detected by means of the measurement system. When the sliding parts 19 wear out or become damaged, a change may occur in a trend of changes in the bending of the boom, which also may be detected by the control unit. That is to say, the control unit may be arranged to monitor the bending behaviour of the boom and detect sudden changes taking place therein and a trend of changes in the bending. If the bending suddenly increases, deviating from the trend, it may be concluded that the sliding parts need to be replaced. In addition to the bending caused by the clearances, the measurement results given by the angle sensors 8a, 8b also include the particular bending of each boom portion 18a, 18b. Typically, a telescopic boom part comprises several successive boom portions, which, by means of angle sensors arranged in the outer boom portions, enables a total bending which accumulates from the clearances and bendings between all of them to be determined.

A uniform line in Figure 5 depicts a theoretical completely rigid boom 3 while a broken line is used for showing a bent boom loaded by a maximum load. When the arrangement set forth in this application is used, the bending of the boom 3 and the resulting change in the position of the man cage 6 may be accurately known by the control unit, which enables the control unit to automatically compensate for the position change caused by the bending. The control unit may correct coordinate data 20 automatically. When the position of the boom is accurately known by the control unit, the use of overdimensioned reaching range tolerances T1 may be avoided. Typically, the control unit is arranged to give a signal if the boom is driven to an end of the reaching range tolerance T1 from the maximum permissible reaching range R at which the personnel hoist is still stabile. Presently, the tolerance T1 is set to be quite high since the bending of the boom is not accurately known. Since the bending of the boom may now be determined accurately, it is also possible to use a smaller reaching range tolerance T2. This means that the boom may have a larger free range of use and reach.

It is to be noted that the angle sensors 8a, 8b may be calibrated e.g. when the boom 3 has been driven onto the carrier 2 in to its transportation position, wherein the boom 3 lies supported and with no bending load.

Instead of an inclinometer, the angle sensor may be any other appropriate angle sensor, such as a gyro sensor.

In some cases, the features set forth in the present application may be used as such, irrespective of other features. On the other hand, when necessary, the features set forth in the present application may be combined in order to provide different combinations.

The figures and the related description are only intended to illustrate the idea of the invention. The details of the invention may vary within the scope of the claims.

## Claims

1. A personnel hoist, comprising:
a carrier (2);
a rotatable frame (4) arranged on the carrier (2) rotatably;
a boom (3) comprising a first boom part (3a) and a second boom part (3b); the lower part of the boom (3) being fastened rotatably to the rotatable frame (4), the lower part of the boom (3, 3a, 3b) being provided with at least one first angle sensor (8a) and the upper part of the boom (3, 3a, 3b) being provided with at least one second angle sensor (8b); and
at least one control unit (9) arranged to determine an angle difference (KE) on the basis of angle data given by the first angle sensor (8a) and angle data given by the second angle sensor (8b), and further, the bending of the boom on the basis of the angle difference (KE) and a distance (L) between the angle sensors during use of the personnel hoist (1);
**characterized in that**
the first boom part (3) of the boom (3) is fastened by means of a first joint (5) to the rotatable frame (4) as well as the second boom part (3b) of the boom (3) is fastened by means of a second joint (7) to an upper end of the first boom part (3a); and that
at least one man cage (6) is arranged in a free end of the second boom part (3b).

2. A personnel hoist as claimed in claim 1, **characterized in that**
the boom (3, 3a, 3b) is telescopically elongatable and shortenable; the personnel hoist comprises measuring means (15) for determining a length of the boom; and
the control unit (9) is arranged to take into account the determined length of the boom and the distance (L) between the angle sensors when determining the bending of the boom.

## Patentansprüche

1. Ein Personalhebezeug, das Folgendes aufweist:
einen Träger (2);
einen drehbaren Rahmen (4), der drehbar an den Träger (2) angeordnet ist;
einen Ausleger (3), der einen ersten Auslegerteil (3a) und einen zweiten Auslegerteil (3b) aufweist; wobei der untere Teil des Auslegers (3) drehbar an dem drehbaren Rahmen (4) befestigt ist, der untere Teil des Auslegers (3, 3a, 3b) mit mindestens einem ersten Winkelsensor (8a) versehen ist und der obere Teil des Auslegers (3, 3a, 3b) mit mindestens einem zweiten Winkelsensor (8b) versehen ist; und
mindestens eine Kontrolleinheit (9), der angeordnet ist, die Winkeldifferenz (KE) auf der Basis der durch den ersten Winkelsensor (8a) gegebenen Winkeldaten und der durch den zweiten Winkelsensor (8b) gegebenen Winkeldaten, und weiter, die Biegung des Auslegers auf der Basis der Winkeldifferenz (KE) und der Entfernung (L) zwischen den Winkelsensoren während des Gebrauchs des Personalhebezeugs (1) zu bestimmen;
**dadurch gekennzeichnet, dass**
der erste Auslegerteil (3) des Auslegers (3) mit Hilfe eines ersten Gelenks (5) an den drehbaren Rahmen (4) sowie der zweite Auslegerteil (3b) des Auslegers (3) mit Hilfe eines zweiten Gelenks (7) an einem oberen Ende des ersten Auslegerteils (3a) befestigt ist; und dass
mindestens ein Mannkorb (6) an ein freies Ende des zweiten Auslegerteils (3b) angeordnet ist.

2. Ein Personalhebezeug gemäß dem Patentanspruch 1, **dadurch gekennzeichnet, dass**
der Ausleger (3, 3a, 3b) teleskopisch zu verlängern und zu verkürzen ist;
das Personalhebezeug Messmittel (15) zur Bestimmung der Länge des Auslegers aufweist; und
die Kontrolleinheit (9) angeordnet ist, die bestimmte Länge des Auslegers und die bestimmte Entfernung (L) zwischen den Winkelsensoren bei der Bestimmung der Biegung des Auslegers zu berücksichtigen.

## Revendications

1. Elévateur de personnel, comprenant :
un support (2) ;
un châssis rotatif (4) agencé sur le support (2) de manière rotative ;
une flèche (3) comprenant une première partie de flèche (3a) et une deuxième partie de flèche (3b) ; la partie inférieure de la flèche (3) étant fixée en rotation sur le châssis rotatif (4), la partie inférieure de la flèche (3, 3a, 3b) étant prévue avec au moins un premier capteur d'angle (8a) et la partie supérieure de la flèche (3, 3a, 3b) étant prévue avec au moins un deuxième capteur d'angle (8b) ; et
au moins une unité de commande (9) agencée pour déterminer une différence d'angle (KE) en fonction des données d'angle données par le premier capteur d'angle (8a) et les données d'angle données par le deuxième capteur d'angle (8b), et en outre, la flexion de la flèche en fonction de la différence d'angle (KE) et d'une distance (L) entre les capteurs d'angle pendant l'utilisation de l'élévateur de personnel (1) ;
**caractérisé en ce que** :
la première partie de flèche (3) de la flèche (3) est fixée au moyen d'un premier joint (5) sur le châssis rotatif (4) ainsi que la deuxième partie de flèche (3b) de la flèche (3) est fixée au moyen d'un deuxième joint (7) sur une extrémité supérieure de la première partie de flèche (3a) ; et **en ce que** :
au moins une cabine (6) est agencée dans une extrémité libre de la deuxième partie de flèche (3b).

2. Elévateur de personnel selon la revendication 1, **caractérisé en ce que** :
la flèche (3, 3a, 3b) peut être allongée et raccourcie de manière télescopique ;
l'élévateur de personnel comprend des moyens de mesure (15) pour déterminer une longueur de la flèche ; et
l'unité de commande (9) est agencée pour prendre en compte la longueur déterminée de la flèche et la distance (L) entre les capteurs d'angle lors de la détermination de la flexion de la flèche.
